# EUROPÄISCHE PATENTSCHRIFT

(11) **EP 0 364 734 B1**
(45) Veröffentlichungstag und Bekanntmachung des Hinweises auf die Patenterteilung: **05.04.1995**
(21) Anmeldenummer: 89116938.5
(22) Anmeldetag: 13.09.1989
(51) Int. Cl.: C09B 67/00, C09B 67/02

(54) **Färbemittel und Verfahren zu seiner Herstellung**
Dye stuff and process for manufacturing same
Moyen de coloration et procédé de préparation

(30) Priorität: 22.09.1988 DE 3832193
(43) Veröffentlichungstag der Anmeldung: 25.04.1990
(73) Patentinhaber: Deutsche Baby-Farben Gesellschaft mit beschränkter Haftung, 60386 Frankfurt (DE)
(72) Erfinder: Knoff, Helga, D-6380 Bad Homburg (DE)
(74) Vertreter: Schumacher, Bernd, Dipl.-Ing.

(56) Entgegenhaltungen:
- EP-A- 0 121 308
- EP-A- 0 232 001
- US-A- 4 113 815

## Beschreibung

Die Erfindung betrifft ein Färbemittel zum nachträglichen Färben von Textilien, insbesondere solchen aus Polyamid oder Acetat, mit einem Farbstoff.

Zum Färben von Textilien sind diverse Farbstoffe bekannt, beispielsweise Metallkomplefarbstoffe für Wolle sowie Polyamid, substantive Farbstoffe für Zellulosefasern und Säurefarbstoffe für Wolle sowie Polyamid. Diese Farbstoffe sind für viele Anwendungszwecke, insbesondere zum Färben von Strümpfen und dergleichen aus Polyamid oder Acetat durch den Endverbraucher, relativ ungeeignet, weil der Färbevorgang kompliziert ist und zu einem ungleichmäßigen Färbeergebnis führt.

Die EP-A-232001 befaßt sich mit Mikrokapseln, die einen Farbstoff und eine Flüssigkeit getrennt aufweisen und bei denen ein Aufbrechen der Kapsel zu einer Farbstoffübertragung führt. Die EP-A-121308 befaßt sich mit einem Pigmentkonzentrat zum feineren Abtönen von flüssigen Farben. Dieser Stand der Technik betrifft nicht das Färben von Textilien.

Der vorliegenden Erfindung liegt die Aufgabe zugrunde, für den Endverbraucher ein einfach, preiswert und äußerst leicht zu handhabendes Färbemittel zu schaffen, mit dem sich in unkomplizierter Weise Textilien schnell und gleichmäßig färben lassen. Ferner soll ein zum Herstellen eines solchen Färbemittels geeignetes Verfahren geschaffen werden.

Zur Lösung der gestellten Aufgabe zeichnet sich ein Färbemittel der im Oberbegriff genannten Art erfindungsgemäß aus durch einen Farbstoffträger, der aufgrund seiner oberflächengroßen bzw. hohlraumreichen Baustruktur ein großes Farbstoffaufnahme- oder -anlagerungsvermögen aufweist, und durch einen auf und/oder in den Farbstoffträger auf- bzw. eingebrachten, hieran physikalisch gebundenen sowie hiervon durch Wasser abtrennbaren, in Wasser löslichen Farbstoff.

Da der in Wasser lösliche Farbstoff an dem Farbstoffträger nur angelagert ist, ohne diesen chemisch zu färben, kann er vor allem in einem erwärmten Wasserbad leicht von dem Farbstoffträger abgetrennt werden, um eine geeignete Färbelösung für Textilien zu bilden. Bei gleichzeitiger Verwendung mehrerer Farbstoffträger mit unterschiedlichen Farbstoffen können ohne weiteres geeignete Mischfarben erzeugt werden. Nach dem Lösen des Farbstoffs läßt sich der Farbstoffträger aus der Färbelösung entfernen. Ein solches Färbemittel ist äußerst praktikabel, da es im unbenutzten Zustand trocken ist und somit beispielsweise farblosen bzw. hellen Textilien, wie Strümpfen oder Strumpfhosen, die nachträglich vom Endverbraucher bedarfsgerecht zu färben sind, als preiswerte Zusatzausstattung beigepackt werden kann. Der Endverbraucher kann dann unter Zuhilfenahme einer Farbtabelle die für eine bestimmte Textilien- bzw. Färbelösungsmittelmenge sowie Färbung erforderliche Färbemittelauswahl treffen, um das Färbemittel in nachträglich zu erwärmendes Wasser einzubringen, in dem sich der Farbstoff von dem dann zu entfernenden Farbstoffträger abtrennt. In einer derartig definiert hergestellten Färbelösung kann die Textilie gezielt und farbecht gefärbt werden.

Die Weiterbildung von Anspruch 2 betrifft einen Dispersionsfarbstoff. Dieser eignet sich vor allem zum gleichmäßigen Färben von Textilien aus Polyamid sowie Acetat, wie von Damenstrümpfen, Strumpfhosen und dergleichen.

Die Weiterbildung von Anspruch 3 betrifft einen Farbstoffträger aus Zellulose. Die Weiterbildung von Anspruch 4 betrifft einen Farbstoffträger aus Kunststoff, vorzugsweise ausgenommen Polyamid und Acetat. Die Weiterbildung von Anspruch 5 betrifft einen Farbstoffträger aus Schaumgummi, Filz, einschließlich eines solchen aus Wolle, Faservliesstoff oder Zellulosepapier. Diese Weiterbildungen beinhalten geeignete Farbstoffträger für den anzulagernden Farbstoff, wie einen Dispersionsfarbstoff. Wichtig ist dabei, daß der Farbstoff keine chemische Färbung des Farbstoffträgers hervorruft. Demnach muß für einen Dispersionsfarbstoff, der zum Färben von Polyamid oder Acetat dient, ein solcher Farbstoffträger benutzt werden, der nicht aus Polyamid oder Acetat besteht.

Die Weiterbildung von Anspruch 6 betrifft einen Farbstoff mit einem Anteil an Farbhilfestoffen, wie Dispergiermittel, Antimigrationsmittel, Netzmittel, Antischaummittel, Egalisiermittel, Duftstoff. Dieses erleichtert die Verarbeitung und verbessert das Farbeergebnis.

Die Weiterbildungen der Ansprüche 7 und 8 betreffen einerseits einen dünnschichtigen Farbstoffträger etwa gleichbleibender Dicke und andererseits eine Dicke des Farbstoffträgers von bis etwa 3 mm. Dieses führt zu einer leichten Herstellbarkeit und verbessert die Handhabung, weil dünnschichtige Farbstoffträger naturgemäß eine größere Oberfkäche haben, in in raumsparender Weise einer Textilie beizupacken sind und schnell verarbeitet, d.h. von Farbstoff getrennt, werden können.

Gemäß Anspruch 9 hat der Farbstoffträger eine für die Farbstoffdosierung definierte Abmessung. Hierdurch kann der Endverbraucher auf sehr einfache Weise eine richtige Dosierung vornehmen, weil die definierte Abmessung beispielsweise nur noch eine variable Größe zuläßt, wie eine Länge oder eine Stückzahl.

Gemäß Anspruch 10 ist der Farbstoffträger streifenförmig mit konstanter Breite ausgebildet. In weiterer Ausgestaltung hat der Farbstoffträger gemäß Anspruch 11 eine Breite von 1 cm und eine Grundlänge von vorzugsweise 15 - 20 cm. Diese Weiterbildungen sind für die Praxis besonders geeignet, weil derartige Farbstoffträger leicht herzustellen, einfach zu verpacken und unproblematisch zu dosieren sind. Dieses gilt insbesondere auch im Zusammenhang mit den Weiterbildungen der Ansprüche 12 und 13. Gemäß Anspruch 12 weist der streifenförmige Farbstoffträger in Längsrichtung gegenseitig beabstandete und in Querrichtung verlaufende definierte Dosiermarkierungen auf, wie Kerben, Stanzungen, Perforationen oder sonstige definierte Abtrennmittel. Gemäß Anspruch 13 haben die Dosiermarkierungen einen gegenseitigen Abstand von 1cm. Bei diesen beiden Weiterbildungen ist der Farbstoffträger-Streifen gegebenenfalls ohne zusätzliches Werkzeug stufenweise definiert dosierbar.

Die alternative Weiterbildung von Anspruch 14 betrifft eine Anzahl kleiner quadratischer, rechteckiger, kreisrunder oder ovaler und für die Farbstoffdosierung abzählbarer Farbstoffträger. Dieses setzt lediglich ein vom Färbeergebnis abhängiges Abzählen einzelner geeigneter Farbstoffträger voraus.

Die Weiterbildung von Anspruch 15 betrifft eine Gebrauchseinheit mit mehreren Farbstoffträgern mit unterschiedlichem Farbstoff. Die Weiterbildung von Anspruch 16 betrifft mehrere Farbstoffträger mit gelben, roten und blauen Farbstoffen. Die Weiterbildung von Anspruch 17 betrifft zusätzliche Farbstoffträger mit braunem Farbstoff. Mit diesen Weiterbildungen lassen sich bedarfsgerecht weitgehend beliebige Farbtöne, beispielsweise mehr als tausend Farbtöne, herstellen. In der Praxis hat sich gezeigt, daß dabei die Weiterbildung von Anspruch 17 eine Erweiterung der Farbpalette bzw. bei bestimmten Farben eine Verbesserung der Farbintensität ermöglicht.

Die Weiterbildung von Anspruch 18 betrifft eine Farbtabelle mit einer Zuordnung der erzielbaren Mischfarben und der für eine bestimmte Farblösung bzw. Färbung erforderlichen Farbstoffträgermengen, vorzugsweise in Längen, Flächen, wie cm² , oder Stückzahl an Farbstoffträger. Dieses ist insbesondere in Verbindung mit den Weiterbildungen der Ansprüche 15-17 äußerst praktikabel, da eine solche Gebrauchseinheit, die einer nachträglich zu färbenden Textilie beigelegt werden kann, den Endverbraucher in die Lage versetzt, ohne besondere Kenntnisse und Zusatzmittel eine Textilie sehr schnell und bedarfsgerecht zu färben.

Die Weiterbildung von Anspruch 19 betrifft einen Farbstoffträger mit einer Mischung aus mehreren zum Färben unterschiedlicher Materialien geeigneten Farbstoffen. Hierdurch können mit demselben Färbemittel unterschiedliche Materialien gefärbt werden, wie beispielsweise solche aus Polyamid, Acetat, Wolle oder Baumwolle.

Zur Lösung der gestellten Aufgabe zeichnet sich ferner ein Verfahren zum Herstellen eines Färbemittels nach der vorliegenden Erfindung dadurch aus, daß an einem oberflächengroßen bzw. hohlraumreichen Farbstoffträger, vorzugsweise einem solchen in dünnschichtiger Bahnenform, durch Imprägnieren oder Besprühen oder Aufrakeln oder Pflatschen ein Farbstoff angelagert wird, daß dann der Farbstoff auf bzw. an dem Farbstoffträger getrocknet wird und daß schließlich der Farbstoffträger in Einzelstücke, wie Streifen, geschnitten wird. Ein solches Verfahren ist relativ einfach und führt zu einem preiswerten Färbemittel, das der Hersteller von ungefärbten Textilien diesen beilegt, damit der Endverbraucher die gewünschte Färbung vornimmt.

Die Erfindung führt zu verschiedenen Vorteilen. Zum einen kann der Endverbraucher seine Textilien wunschgemäß färben, ohne auf ein bestimmtes Farbangebot im Textilhandel angewiesen zu sein. Ferner kann der Endverbraucher eine gefärbte Textilie umfärben, gegebenenfalls nach vorherigem Einsatz eines Entfärbungsmittels.

Zum anderen wird durch die Erfindung auch der Handel entlastet, weil er gegebenenfalls auf ein großes Farbangebot verzichten kann. Dieses führt zu einer Reduzierung der Lagerhaltung und somit zu einer Senkung der Kosten. Und schließlich kann der Hersteller auf diverse Färbevorgänge verzichten, wodurch ebenfalls die Kosten erheblich gesenkt werden.

Die Erfindung wird nachfolgend an zeichnerisch dargestellten Ausführungsbeispielen näher erläutert. Es zeigen:
- Figur 1 -: in einem schematischen Schnitt einen Farbstoffträger mit oberflächlich angelagertem Farbstoff,
- Figuren 2 - 4 -: verschiedenartig geformte Farbstoffträger,
- Figur 5 -: in Draufsicht eine in einzelne Streifen zu zerschneidende Farbstoffträger-Bahn,
- Figur 6 -: in einer schematischen Darstellung eine Einrichtung zum Herstellen eines Farbstoffträgers nach der vorliegenden Erfindung und
- Figur 7 -: in einer schematischen Darstellung den Färbevorgang beim Endverbraucher.

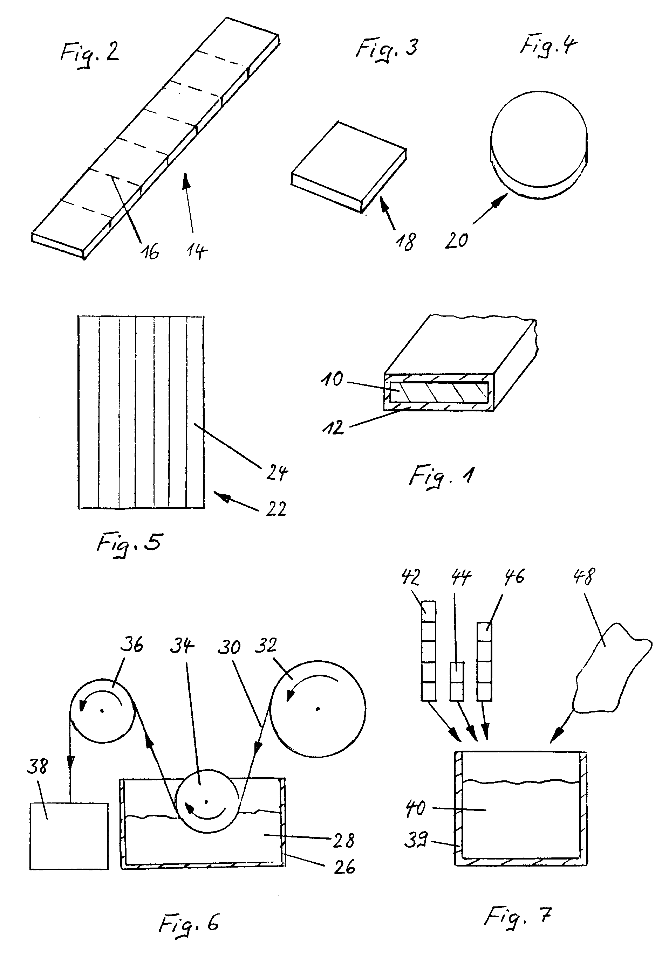

Gemäß Figur 1 wird ein im Querschnitt beispielsweise länglichrechteckiger, wie ein dünnschichtig streifenförmiger, Farbstoffträger 10 so behandelt, wie imprägniert oder besprüht, daß sich an seiner großen Oberfläche ein Farbstoff 12 anlagert. Im Normalzustand ist dieser Farbstoff 12, der sich auch in innere Hohlräume des Farbstoffträgers 10 hinein erstrecken kann, trocken. Beim Einbringen in Wasser, insbesondere beim Erwärmen desselben beispielsweise auf 40 ° C, löst sich der lediglich am Farbstoffträger 10 angelagerte Farbstoff 12, um mit dem Wasser eine geeignete Färbelösung zu bilden.

Der in Figur 1 schematisch dargestellte Farbstoffträger 10 kann verschiedenartig gestaltet sein und beispielsweise aus einem Faservliesstoff bestehen, dessen hohlraumreiche Struktur der Farbstoff 12 weitgehend durchdringen kann, ohne die Substanz des Farbstoffträgers 10 chemisch zu färben.

Gemäß Figur 2 ist ein Farbstoffträger 14 streifenförmig mit gleichbleibender Dicke und gleichbleibender Breite aufgebaut. Im vorliegenden Fall weist der Farbstoffträger 14 in äquidistanten Abständen in Querrichtung verlaufende Dosiermarkierungen 16 auf, wie beispielsweise Prägungen, Perforierungen oder dergleichen, die durch bloßes Abzählen der Abschnitte und durch entsprechendes Abtrennen ein definiertes Dosieren eines bestimmten Farbstoffmenge zulassen. Beispielsweise kann der etwa 15 - 50 cm lange Farbstoffträger 14 eine Breite von 1 cm und einen äquidistanten Abstand der Dosiermarkierungen 16 ebenfalls von 1 cm haben. Die kleinste Dosiereinheit beträgt somit 1 cm² Farbstoffträger, was einer bestimmten Farbstoffmenge entspricht.

Gemäß den Figuren 3 und 4 können auch pillenartige Farbstoffträger, wie rechteckige Farbstoffträger 18 oder kreisrunde Farbstoffträger 20, eingesetzt werden, die zur richtigen Dosierung der Farbstoffmenge lediglich abgezählt werden müssen.

Figur 5 zeigt schematisch, daß aus einer mit Farbstoff belegten Farbstoffträger-Bahn 22 einzelne Farbstoffträger-Streifen 24 geschnitten werden können.

Figur 6 zeigt in schematischer Weise ein sehr einfaches Ausführungsbeispiel für die Herstellung der Farbstoffträger. In einer Wanne 26 befindet sich in gelöster Form ein Farbstoff 28. Eine Farbstoffträger-Bahn 30, beispielsweise eine solche aus einem Faservliesstoff, wird von einer Vorratsrolle 32 abgerollt, mittels einer Umlenkrolle 34 zumindest einseitig in den Farbstoff 28 eingetaucht, dann zum Trocknen über eine gegebenenfalls erwärmte Umlenkrolle 36 außerhalb des Farbstoffs 28 geleitet und schließlich einer Station 38 zugeführt, in der beipielsweise aus der Bahn einzelne Farbstoffträger-Streifen definierter Breite geschnitten und bevorratet, wie aufgerollt, werden können.

In Figur 7 ist der Färbevorgang beim Endverbraucher lediglich schematisch dargestellt. In einem Topf 38, wie einem Kochtopf, wird beispielsweise 1 Liter kaltes Wasser 40 eingefüllt. Anhand einer nicht dargestellten Farbtabelle kann der Endverbraucher in Abhängigkeit von einer zu färbenden Textilie 48, wie einer Strumpfhose, und der erwünschten Färbung ablesen, welche und wieviele Farbstoffträger er für den Färbevorgang benötigt. Im vorliegenden Fall sind 5 Einheiten eines Farbstoffträgers 42, 2 Einheiten eines Farbstoffträgers 44 und 4 Einheiten eines Farbstoffträgers 46 erforderlich, die in das Wasser 40 einzubringen sind. Nach Erwärmen auf beispielsweise 40 °C und entsprechendem Umrühren sind die Farbstoffträger 42, 44, 46 nahezu farblos, so daß sie entfernt werden können. Die zu färbende Textilie 48 wird in die so entstandene Färbelösung eingebracht, in der sie je nach Farbton beispielsweise 5 - 15 Minuten verbleibt. Danach wird die gefärbte Textilie 48 wieder aus der Färbelösung herausgenommen, mit warmem Wasser gründlich gespült (evt. mit einem Zusatz an Spülmittel) und wie üblich getrocknet.

## Patentansprüche

1. Färbemittel zum nachträglichen Färben von Textilien, insbesondere solchen aus Polyamid oder Acetat mit einem Farbstoff, gekennzeichnet durch einen Farbstoffträger (10, 14, 18, 20), der aufgrund seiner oberflächengroßen bzw. hohlraumreichen Baustruktur ein großes Farbstoffaufnahme- oder anlagerungsvermögen aufweist, und durch einen auf und/oder in den Farbstoffträger auf- bzw. eingebrachten, hieran physikalisch gebundenen sowie hiervon durch Wasser abtrennbaren, in Wasser löslichen Farbstoff (12).

2. Färbemittel nach Anspruch 1, gekennzeichnet durch einen Dispersionsfarbstoff (12).

3. Färbemittel nach Anspruch 1 und 2, gekennzeichnet durch einen Farbstoffträger (10, 14, 18, 20) aus Zellulose.

4. Färbemittel nach Anspruch 1 oder 2, gekennzeichnet durch einen Farbstoffträger (10, 14, 18, 20) aus Kunststoff, vorzugsweise ausgenommen Polyamid und Acetat.

5. Färbemittel nach Anspruch 1 oder 2, gekennzeichnet durch einen Farbstoffträger (10, 14, 18, 20) aus Schaumgummi, Filz, einschließlich eines solchen aus Wolle, Faservliesstoff oder Zellulosepappe.

6. Färbemittel nach einem der Ansprüche 1 bis 5, gekennzeichnet durch einen Farbstoff (12) mit einem Anteil an Farbhilfsstoffen, wie Dispergiermittel, Antimigrationsmittel, Netzmittel, Antischaummittel, Egalisiermittel, Duftstoff.

7. Färbemittel nach einem der Ansprüche 1 bis 6, gekennzeichnet durch einen dünnschichtigen Farbstoffträger (10, 14, 18, 20) etwa gleichbleibender Dicke.

8. Färbemittel nach Anspruch 7, dadurch gekennzeichnet, daß der Farbstoffträger (10) eine Dicke von bis etwa 3 mm hat.

9. Färbemittel nach Anspruch 7 oder 8, dadurch gekennzeichnet, daß der Farbstoffträger (10, 14, 18, 20) eine für die Farbstoffdosierung definierte Abmessung hat.

10. Färbemittel nach Anspruch 9, dadurch gekennzeichnet, daß der Farbstoffträger (10, 14) streifenförmig mit konstanter Breite ausgebildet ist.

11. Färbemittel nach Anspruch 10, dadurch gekennzeichnet, daß der Farbstoffträger (10, 14) eine Breite von 1 cm und eine Grundlänge von vorzugsweise 15 - 20 cm hat.

12. Färbemittel nach Anspruch 10 oder 11, dadurch gekennzeichnet, daß der streifenförmige Farbstoffträger (10, 14) in Längsrichtung gegenseitig beabstandete und in Querrichtung verlaufende definierte Dosiermarkierungen (16) aufweist, wie Kerben, Stanzungen, Perforationen oder sonstige definierte Abtrennmittel.

13. Färbemittel nach Anspruch 12, dadurch gekennzeichnet, daß die Dosiermarkierungen (16) einen gegenseitigen Abstand von 1 cm haben.

14. Färbemittel nach Anspruch 9, gekennzeichnet durch eine Anzahl kleiner quadratischer, rechteckiger, kreisrunder oder ovaler und für die Farbstoffdosierung abzählbarer Farbstoffträger (18, 20).

15. Färbemittel nach einem der Ansprüche 1 - 14, gekennzeichnet durch eine Gebrauchseinheit mit mehreren Farbstoffträgern (10, 14, 18, 20) mit unterschiedlichem Farbstoff (12).

16. Färbemittel nach Anspruch 15, gekennzeichnet durch mehrere Farbstoffträger (10, 14, 18, 20) mit gelben, roten und blauen Farbstoffen (12).

17. Färbemittel nach Anspruch 16, gekennzeichnet durch zusätzliche Farbstoffträger (10, 14, 18, 20) mit braunem Farbstoff (12).

18. Färbemittel nach einem der Ansprüche 15 - 17, gekennzeichnet durch eine Farbtabelle mit einer Zuordnung der erzielbaren Mischfarben und der für eine bestimmte Farblösung bzw. Färbung erforderlichen Farbstoffträgermengen, vorzugsweise in Längen, Flächen, wie cm², oder Stückzahl an Farbstoffträger.

19. Färbemittel nach einem der Ansprüche 1 - 18, gekennzeichnet durch einen Farbstoffträger (10, 14, 18, 20) mit einer Mischung aus mehreren zum Färben unterschiedlicher Materialien geeigneten Farbstoffen (12).

20. Verfahren zum Herstellen eines Färbemittels nach einem der Ansprüche 1 - 19, dadurch gekennzeichnet, daß an einem oberflächengroßen bzw. hohlraumreichen Farbstoffträger, vorzugsweise einem solchen in dünnschichtiger Bahnenform, durch Imprägnieren oder Besprühen oder Aufrakeln oder Pflatschen ein Farbstoff angelagert wird, daß dann der Farbstoff auf bzw. an dem Farbstoffträger getrocknet wird und daß schließlich der Farbstoffträger in Einzelstücke, wie Streifen, geschnitten wird.

## Claims

1. Colouring agents for the subsequent dyeing of textiles, in particular those made of polyamide or acetate containing a dye, characterised by a dye substrate (10, 14, 18, 20) which by reason of its large surface area or highly porous structure has a high dye uptake or dye adsorption capacity, and by a water-soluble dye (12) which is applied to and/or introduced into the dye substrate, is physically bonded thereto and separable therefrom by water.

2. Colouring agent according to claim 1, characterised by a disperse dye (12).

3. Colouring agent according to claims 1 and 2, characterised by a dye substrate (10, 14, 18, 20) made of cellulose.

4. Colouring agent according to claim 1 or 2, characterised by a dye substrate (10, 14, 18, 20) made of synthetic material, preferably excluding polyamide and acetate.

5. Colouring agent according to claim 1 or 2, characterised by a dye substrate (10, 14, 18, 20) made of foam rubber, felt, including such a substrate made of wool, non-woven material or cellulose board.

6. Colouring agent according to one of claims 1 to 5, characterised by a dye (12) containing a proportion of dye auxiliary substances such as dispersants, antimigration agents, wetting agents, defoaming agents, levelling agents, scents.

7. Colouring agent according to one of claims 1 to 6, characterised by a thin-layered dye substrate (10, 14, 18, 20) of approximately constant thickness.

8. Colouring agent according to claim 7, characterised in that the dye substrate (10) has a thickness of up to approximately 3 mm.

9. Colouring agent according to claim 7 or 8, characterised in that the dye substrate (10, 14, 18, 20) has a defined dimension for dosing the dye.

10. Colouring agent according to claim 9, characterised in that the dye substrate (10, 14) is in the form of strips of constant width.

11. Colouring agent according to claim 10, characterised in that the dye substrate (10, 14) has a width of 1 cm and a basic length preferably of from 15 to 20 cm.

12. Colouring agent according to claim 10 or 11, characterised in that the dye substrate (10, 14) in the form of strips has defined measuring marks (16) running transversely and at a standard distance apart longitudinally, such as scores, stampings, perforations or other defined means of separation.

13. Colouring agent according to claim 12, characterised in that the measuring marks (16) have a standard distance apart of 1 cm.

14. Colouring agent according to claim 9, characterised by a number of small square, rectangular, circular or oval dye substrates (18, 20) which can be counted for dosing the dye.

15. Colouring agent according to one of claims 1 to 14, characterised by a unit for use with several dye substrates (10, 14, 18, 20) with a different dye (12).

16. Colouring agent according to claim 15, characterised by several dye substrates (10, 14, 18, 20) with yellow, red and blue dyes (12).

17. Colouring agent according to claim 16, characterised by additional dye substrates (10, 14, 18, 20) with brown dye (12).

18. Colouring agent according to one of claims 15 to 17, characterised by a colour chart having a classification of the mixed colours obtainable and of the quantities of dye substrate required for a specific dye solution or colouring, preferably in lengths, surface areas such as cm², or numbers of parts of dye substrate.

19. Colouring agent according to one of claims 1 to 18, characterised by a dye substrate (10, 14, 18, 20) with a mixture of several dyes suitable for colouring different materials (12).

20. Process for preparing a colouring agent according to one of claims 1 to 19, characterised in that a dye is taken up on a dye substrate having a large surface area or a highly porous structure, preferably such in the form of thin-layered webbing, by impregnation or spraying or applying by doctor or slop padding, and that the dye is then dried on or against the dye substrate and that finally the dye substrate is cut into individual pieces, such as strips.

## Revendications

1. Colorant pour la teinture ultérieure de textiles, en polyamide ou acétate notamment, avec un pigment, caractérisé par un support de pigment (10, 14, 18, 20), doté d'une capacité d'absorption ou de fixation élevée du pigment en raison de sa structure superficielle élevée et/ou riche en cavités, et par un pigment (12) soluble dans l'eau, appliqué et/ou introduit sur et/ou dans le support de pigment, lié physiquement à ce dernier, et séparable à l'eau de ce support.

2. Colorant suivant la revendication 1, caractérisé par un colorant de dispersion (12).

3. Colorant suivant les revendications 1 et 2, caractérisé par un support de pigment (10, 14, 18, 20) en cellulose.

4. Colorant suivant l'une des revendications 1 ou 2, caractérisé par un support de pigment (10, 14, 18, 20) en matière plastique, polyamide et acétate exceptés, de préférence.

5. Colorant suivant l'une des revendications 1 ou 2, caractérisé par un support de pigment (10, 14, 18, 20) en caoutchouc mousse, feutre, y compris un support en laine, non-tissé ou papier de cellulose.

6. Colorant suivant l'une quelconque des revendications 1 à 5, caractérisé par un pigment (12) avec une part d'auxiliaires de teinture, tels qu'agents dispersants, antimigratoires, mouillants, produits antimousse, agents d'unisson, matière odorante.

7. Colorant suivant l'une quelconque des revendications 1 à 6, caractérisé par un support de pigment à couche mince (10, 14, 18, 20), d'une épaisseur à peu près constante.

8. Colorant suivant la revendication 7, caractérisé par une épaisseur maximale du support de pigment (10) de l'ordre de 3 mm.

9. Colorant suivant l'une des revendications 7 ou 8, caractérisé en ce que le support de pigment (10, 14, 18, 20) a une dimension définie pour le dosage du pigment.

10. Colorant suivant la revendication 9, caractérisé en ce que le support de pigment (10, 14) est réalisé en forme de ruban, d'une largeur constante.

11. Colorant suivant la revendication 10, caractérisé en ce que le support de pigment (10, 14) présente une largeur d'1 cm et une longueur de base de 15 - 20 cm, de préférence.

12. Colorant suivant l'une des revendications 10 ou 11, caractérisé en ce que le support de pigment (10, 14) en forme de ruban présente des repères de dosage définis (16), à distance mutuelle dans le sens longitudinal et situés dans le sens transversal, tels qu'encoches, découpes, perforations, ou divers moyens de séparation définis.

13. Colorant suivant la revendication 12, caractérisé en ce que les repères de dosage (16) présentent une distance mutuelle d'1 cm.

14. Colorant suivant la revendication 9, caractérisé par un nombre de petits supports de pigment (18, 20) carrés, rectangulaires, circulaires ou ovales, dénombrables pour le dosage du pigment.

15. Colorant suivant l'une quelconque des revendications 1 à 14, caractérisé par une unité d'utilisation avec plusieurs supports de pigment (10, 14, 18, 20), d'un pigment différent (12).

16. Colorant suivant la revendication 15, caractérisé par plusieurs supports de pigment (10, 14, 18, 20), avec des pigments jaunes, rouges et bleus (12).

17. Colorant suivant la revendication 16, caractérisé par des supports de pigment supplémentaires (10, 14, 18, 20), avec un pigment brun (12).

18. Colorant suivant l'une quelconque des revendications 15 à 17, caractérisé par une table chromatologique avec une affectation des couleurs mêlées possibles et des quantités de supports de pigment, requises pour une solution tinctoriale et/ou une teinture données, de préférence en longueurs, surfaces, telles que cm², ou nombre de supports de pigments.

19. Colorant suivant l'une quelconque des revendications 1 à 18, caractérisé par un support de pigment (10, 14, 18, 20) avec un mélange de plusieurs pigments (12), adaptés à la teinture de différentes matières.

20. Procédé pour la préparation d'un colorant suivant l'une quelconque des revendications 1 à 19, caractérisé en ce qu'un pigment est fixé par imprégnation, aspersion, raclage ou placage, sur un suport de pigment de grande surface et/ou riche en cavités, de préférence en forme de bande à couche mince, en ce que le pigment est ensuite séché sur et/ou dans le support de pigment, et en ce que le support de pigment est enfin découpé en sections individuelles, telles que rubans.
